# EUROPEAN PATENT APPLICATION

(11) **EP 2 239 094 A1**
(43) Date of publication of application: **13.10.2010**
(21) Application number: 10156568.7
(22) Date of filing: 15.03.2010
(51) Int. Cl.: B24B 7/24, C03C 15/02, G01C 19/66

(54) **Methods of protecting surfaces from polishing residue**

(30) Priority: 08.04.2009 US 420074
(71) Applicant: Honeywell International Inc., Morristown, NJ 07962 (US)
(72) Inventor: McCoy, Michael, Morristown, NJ 07962-2245 (US); Thorland, Rodney H., Morristown, NJ 07962-2245 (US); Debaggis, Amelia A., Morristown, NJ 07962-2245 (US); Seiber, Bruce A., Morristown, NJ 07962-2245 (US)
(74) Representative: Buckley, Guy Julian

(57) **Abstract**

A method of protecting a surface of a device from residual polishing compound comprises applying a thin barrier layer of coating material to the surface of the device; polishing the surface with a polishing compound; rinsing the polishing compound from the device; and removing the thin barrier layer from the surface of the device to remove the residual polishing compound.

## Description

### BACKGROUND

The manufacture of many solid-state devices, such as laser gyroscopes, typically involves numerous machining, polishing, and etching processes to achieve the desired geometric and surface finish characteristics. However, these processes can cause excessive contamination on the surfaces of the device. For example, polishing residue particles can affect critical performance metrics of a device, such as bias and angular random walk in a laser gyroscope.

One typical method of protecting the surfaces from the contamination involves stuffing bores and gaps in the device with a wax. Each critical surface is taped before polishing and then re-taped after it has been polished. The remaining tape wax and residual polishing compound are then removed. However, the tape used in the process can leave adhesive on the critical surfaces that can affect performance of the device. In addition, the wax is difficult to remove and can fail to protect the surfaces adequately from polishing residue.

### SUMMARY

In one embodiment a method of protecting a surface of a device from residual polishing compound is provided. The method comprises applying a thin barrier layer of coating material to the surface of the device; polishing the surface with a polishing compound; rinsing the polishing compound from the device; and removing the thin barrier layer from the surface of the device to remove the residual polishing compound.

### DRAWINGS

Understanding that the drawings depict only exemplary embodiments and are not therefore to be considered limiting in scope, the exemplary embodiments will be described with additional specificity and detail through the use of the accompanying drawings, in which:

FIG. 1 is a flow chart of one embodiment of a method of protecting a surface from polishing residues.

FIG. 2 is a block diagram of a ring laser gyroscope.

FIG. 3 is a flow chart of one embodiment of a method of manufacturing a ring laser gyroscope.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized.

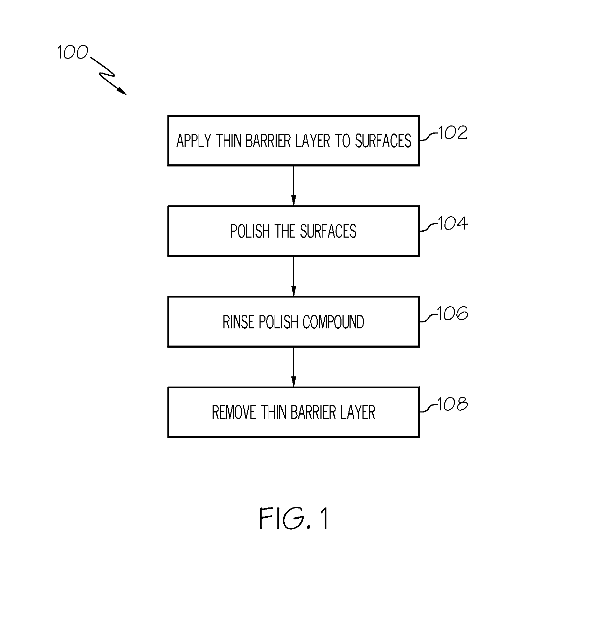

FIG. 1 is a flow chart of one embodiment of a method 100 of protecting a surface of a device from residual polishing compound. At block 102, a thin barrier layer is applied to the surfaces to be protected. For example, in some embodiments, the thin barrier layer is applied to the surface of the entire device, whereas, in other embodiments, only the surfaces of the device to be protected are coated with the thin barrier layer. As used herein, a thin barrier layer refers to a layer of coating material having a thickness that is much smaller than the thickness of the surface of the device to which it is applied. For example, in some embodiments, the thin barrier layer has a thickness in the range of 10 nanometers to 10 micrometers.

The thin barrier layer can be applied using one of various techniques. For example, the thin barrier layer can be applied by immersing the device in a solution of the coating material used for the thin barrier layer. The device is immersed for a sufficient amount of time to allow the coating material to apply itself to the surfaces of the device. This process is commonly known as dip-coating. In another implementation, the coating material is applied to the surfaces of the device through the process commonly known as spin-coating in which the device is rotated at high speed in order to spread the coating material by centrifugal force. In yet another exemplary implementation, the coating material is applied through a process commonly known as vapor coating. In vapor coating, the device is immersed in a vapor of the coating material. The coating material is then allowed to condense on the surfaces of the device. Applying the coating material in a thin barrier layer using, for example, one of the techniques described above provides better coverage of the surface to be protected than techniques involving the application of a wax to the surfaces.

In this example, the coating material consists of a polymer material which dissolves in a basic aqueous solution. In particular, the polymer material dissolves in a basic aqueous solution having a pH (potential of Hydrogen) level of 9 or greater. In addition, the coating material, in some embodiments, is a thin liquid with a low viscosity in order to fill gaps in between surfaces of the device. For example, in one implementation, Hexamethyldisilazane (HMDS) is used as the coating material. However, in other embodiments, other materials are used, such as positive photoresist-type materials which are soluble to an aqueous developer base.

After applying the thin barrier layer at block 102, the surfaces of the device are polished with polishing compound (also referred to as a polishing slurry) using techniques known to one of skill in the art at block 104. At block 106, particles of the polishing compound are removed by rinsing the device. At block 108, the thin barrier layer is removed which also removes polishing compound residue that was not removed by rinsing the device. In particular, in this exemplary embodiment, the thin barrier layer is removed by placing the surfaces of the device in a basic aqueous solution. As described above, the basic aqueous solution, in this example, has a pH of 9 or greater. The coating material used for the thin barrier layer dissolves in the basic aqueous solution. Since the polishing compound residue dries to the thin barrier layer rather than to the device surfaces, dissolving the thin barrier layer removes the residue from the device. In addition, by using an aqueous solution with a pH level of 9 or greater, particles of residual polishing compound are stabilized and do not reattach to the surfaces of the device once the thin barrier layer is dissolved.

Hence, by using the method 100, the surfaces of the device being polished are better protected from the polishing slurry as compared to techniques using wax. In addition, the volume of coating material needed to coat the device is less than the volume of wax needed in conventional techniques. Thus, the cost of protecting the surfaces during polishing are reduced. Furthermore, by using a thin barrier layer, it is possible to perform the necessary measurements of the device while still having a protective barrier applied. Method 100 can be used in the manufacture of various solid state devices. For example, in one implementation, method 100 is used in the manufacture of a ring laser gyroscope (RLG).

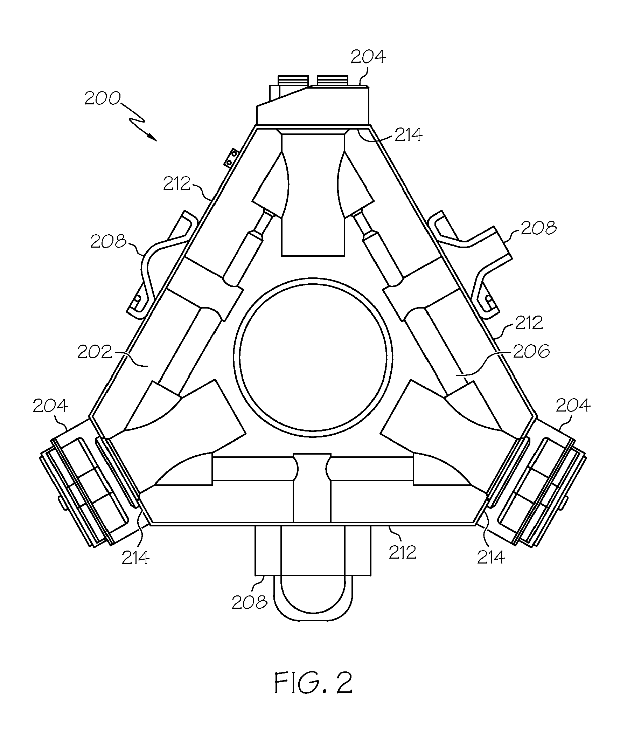

An exemplary RLG 200 is shown in FIG. 2. It is to be understood that the RLG 200 is provided by way of explanation only and that RLG 200 can include other elements not shown that are known to one of skill in the art. RLG 200 is comprised of a block of glass material 202. Attached to each of three mirror seal surfaces 214 is a mirror 204. Within the block of glass material 202 is one of a plurality of internal bores 206. In operation, laser beams travel through bores 206 and are reflected by mirrors 204. Rotation is measured based on changes in the wavelength of the laser as known to one of skill in the art. For proper operation, it is necessary for the sides of the bores 206 to be free of polishing residue. In addition, in order for the mirrors 204 to be properly attached to the mirror seal surfaces 214, the mirror seal surfaces 214 need to be free of polishing residue. Other surfaces should also be free of polishing residue. For example, lapped electrode seal surfaces 212 should be free of polishing residue for improved attachment of electrodes 208 to the block of glass material 202.

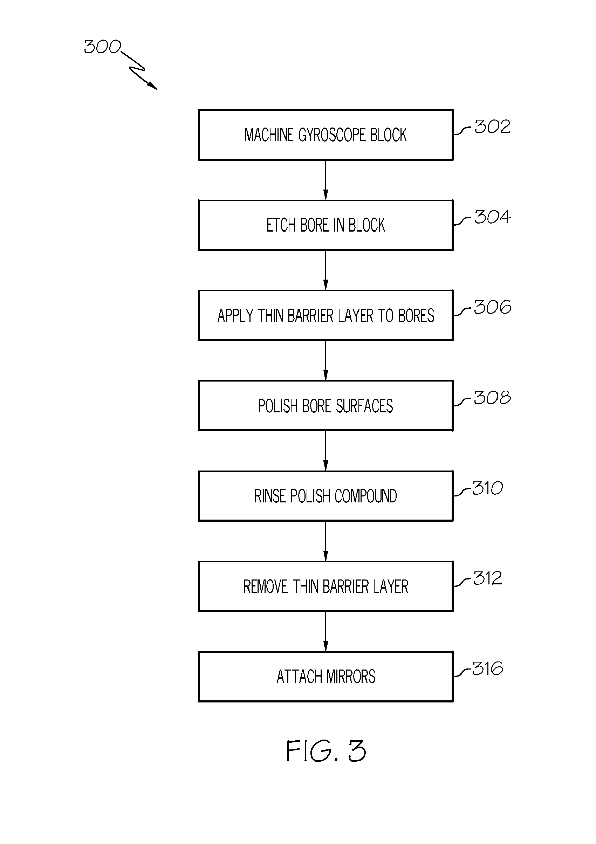

A method 300 of manufacturing a RLG that implements the method 100 above is shown in FIG. 3. At block 302, the block of glass material 202 is machined to have the desired shape. At block 304, bores 206 are etched into the block of glass material 202 using techniques known to one of skill in the art. At block 306, a thin barrier layer is applied to the surfaces of bores 206. For example, the thin barrier layer can be applied using dip-coating, spin-coating, or vapor coating techniques, as described above.

At block 308, the bores 206 are polished with a polishing slurry using techniques known to one of skill in the art. After polishing, the polishing slurry is rinsed off the RLG 200 at block 310. At block 312, the thin barrier layer is removed. For example, the RLG 200 is placed in aqueous solution having a pH level of 9 or greater to dissolve the thin barrier layer. The aqueous solution stabilizes the polishing compound residue which was bonded to the thin barrier layer such that the polishing compound does not bond to the now exposed surfaces of the bores 206. At block 314, the mirrors 204 are attached to the mirror seal surfaces 214 of the glass material 202. For example, the mirrors 204 are attached to the mirror seal surfaces 214 through optical contact adhesion in this embodiment. In some embodiments, attaching the mirrors 204 to the mirror seal surfaces 214 includes performing the steps 306 -312 on the mirror seal surface as described above in relation to the bores 206. Due to the use of the thin barrier layer, the optical contact between the mirror seal surfaces 214 and the mirrors 204 is improved as compared to techniques using wax.

It is to be understood that additional steps, not described herein, may also be included in other implementations of the method 300 of manufacturing a ring laser gyroscope. For example, additional cleaning or other post-polishing steps can be included. In addition, the steps 306-312 can also be applied to other surfaces such as the lapped electrode seal surfaces 212.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method (100) of protecting a surface of a device from residual polishing compound, the method comprising:
applying a thin barrier layer of coating material to the surface of the device (102);
polishing the surface with a polishing compound (104);
rinsing the polishing compound from the device (106); and
removing the thin barrier layer from the surface of the device to remove the residual polishing compound (108).

2. The method (100) of claim 1, wherein applying the thin barrier layer to the surface of the device comprises immersing the device in a liquid coating material for a sufficient amount of time to allow the coating material to adhere to the surface of the device (102).

3. The method (100) of claim 1, wherein applying the thin barrier layer to the surface of the device comprises:
depositing the coating material on the surface of the device (102); and
rotating the device to spread the coating material (102).

4. The method (100) of claim 1, wherein applying the thin barrier layer to the surface of the device comprises:
immersing the device in a vapor of the coating material (102); and
allowing the coating material to condense on the surface of the device (102).

5. The method (100) of claim 1, wherein removing the thin layer barrier comprises dissolving the coating material in an aqueous solution (108).

6. The method (100) of claim 5, wherein the aqueous solution has a pH level of at least 9.

7. The method (100) of claim 1, wherein the coating material is a polymer material having a low viscosity.

8. The method (100) of claim 1, wherein the coating material is Hexamethyldisilazane.

## Amended claims

### Amended claims in accordance with Rule 137(2) EPC.

**1.** (Currently Amended) A method of protecting a surface of a device from residual polishing compound, the method comprising:
applying a thin barrier layer of coating material to a plurality of the surfaces of the device;
polishing one or more of the plurality of surfaces with a polishing compound;
rinsing the polishing compound from the device; and
removing the thin barrier layer from the plurality of surfaces of the device to remove the residual polishing compound.

**2.** (Currently Amended) The method of claim 1, wherein applying the thin barrier layer to the plurality of surfaces of the device comprises immersing the device in a liquid coating material for a sufficient amount of time to allow the coating material to adhere to the plurality of surfaces of the device.

**3.** (Currently Amended) The method of claim 1, wherein applying the thin barrier layer to the plurality of surfaces of the device comprises:
depositing the coating material on the plurality of surfaces of the device; and
rotating the device to spread the coating material.

**4.** (Currently Amended) The method of claim 1, wherein applying the thin barrier layer to the plurality of surfaces of the device comprises:
immersing the device in a vapor of the coating material; and
allowing the coating material to condense on the plurality of surfaces of the device.

**5.** The method of claim 1, wherein removing the thin layer barrier comprises dissolving the coating material in an aqueous solution.

**6.** The method of claim 5, wherein the aqueous solution has a pH level of at least 9.

**7.** The method of claim 1, wherein the coating material is a polymer material having a low viscosity.

**8.** The method of claim 1, wherein the coating material is Hexamethyldisilazane.

## Amended claims

### Amended claims in accordance with Rule 137(2) EPC.

**1.** A method of protecting a surface of a device from residual polishing compound, the method comprising:
applying a thin barrier layer of coating material to a plurality of surfaces of the device;
polishing one or more of the plurality of surfaces with a polishing compound;
rinsing the polishing compound from the device; and
removing the thin barrier layer from the plurality of surfaces of the device to remove the residual polishing compound.

**2.** The method of claim 1, wherein applying the thin barrier layer to the plurality of surfaces of the device comprises immersing the device in a liquid coating material for a sufficient amount of time to allow the coating material to adhere to the plurality of surfaces of the device.

**3.** The method of claim 1, wherein applying the thin barrier layer to the plurality of surfaces of the device comprises:
depositing the coating material on the plurality of surfaces of the device; and
rotating the device to spread the coating material.

**4.** The method of claim 1, wherein applying the thin barrier layer to the plurality of surfaces of the device comprises:
immersing the device in a vapor of the coating material; and
allowing the coating material to condense on the plurality of surfaces of the device.

**5.** The method of claim 1, wherein removing the thin layer barrier comprises dissolving the coating material in an aqueous solution.

**6.** The method of claim 5, wherein the aqueous solution has a pH level of at least 9.

**7.** The method of claim 1, wherein the coating material is a polymer material having a low viscosity.

**8.** The method of claim 1, wherein the coating material is Hexamethyldisilazane.
